# EUROPEAN PATENT SPECIFICATION

(11) **EP 4 110 662 B1**
(45) Date of publication and mention of the grant of the patent: **16.10.2024**
(21) Application number: 21708085.2
(22) Date of filing: 23.02.2021
(51) Int. Cl.: B60T 7/04, B60T 7/08, B60T 8/17, B60T 8/32, B60T 8/40, B60T 13/66, B60T 13/74, B60T 17/22, F16D 65/18

(54) **SAFETY RELEASE IN ELECTRIC BRAKE SYSTEM**
SICHERHEITSAUSLÖSUNG IN EINER ELEKTRISCHEN BREMSANLAGE
LIBÉRATION DE SÉCURITÉ DANS UN SYSTÈME DE FREIN ÉLECTRIQUE

(30) Priority: 24.02.2020 EP 20290025
(43) Date of publication of application: 04.01.2023
(73) Proprietor: Hitachi Astemo Netherlands B.V., 5301 LX Zaltbommel (NL); Foundation Brakes France, 93700 Drancy (FR)
(72) Inventor: BOURLON, Philippe, 77230 DAMMARTIN EN GOELE (FR); OOSTHOEK, Bart, 5301 LX Zaltbommel (NL)
(74) Representative: V.O.
(86) International application number: PCT/NL2021/050123
(87) International publication number: WO 2021/172985

(56) References cited:
- DE-A1- 102017 201 982
- US-A1- 2018 328 430
- US-B1- 6 179 097

## Description

### TECHNICAL FIELD AND BACKGROUND

The present invention relates to an electric brake system, method of controlling the system, controller or software for such system, and vehicle comprising the brake system.

As background, US 6,179,097 B1 describes a braking device having a spindle gear for actuating a friction brake, a gear drive for driving the spindle gear and having an electric motor for driving the gear drive. For safety reasons, a second electric return motor is provided for releasing the friction brake. Particularly when the two electric motors are connected to mutually independent power supplies, this has the advantage that the friction brake, if one of the two electric motors or one of the two power supplies fails, can be released with the other electric motor.

Brake-by-wire is typically used to denote a braking system in which the actuation and transmission devices are decoupled from each other. In a conventional hydraulic brake system, the brake pedal is the actuator and the hydraulic is the transmission device. Here, a distinction is made between the electrohydraulic brake, electro-pneumatic brake (in trucks) and the electric brake. Only the omission of the hydraulic or pneumatic makes the brake a real, so-called "dry" brake-by-wire application, since no fluid technology systems are used here. One reason for wanting to use this technology may be the slowness of currently used media in a brake system. With the help of pure electromechanical solutions, shorter response times may be achieved, which may also be reflected in the achievable braking distances. Another advantage may be a more favorable manufacturability of the brake-by-wire technology, since components in use in hydraulic systems such as a master cylinder, brake booster and brake modulation are expensive to make, in comparison.

An electric vehicle brake typically has an electromechanical actuation device, with which a friction brake lining can be pressed for braking against a brake body that is fixed against relative rotation to a vehicle wheel. The brake body is typically a brake disc or a brake drum. The actuation device typically has an electric motor and a rotation-to-translation conversion gear that converts a rotary driving motion of the electric motor into a translational motion for pressing the friction brake lining against the brake body. Worm gears, such as spindle gears or roller worm drives, are often used as rotation-to-translation conversion gears. It is also possible to convert the rotary motion into a translational motion by means of a pivotable cam, for instance. A step-down gear, for instance in the form of a planetary gear, is often placed between the electric motor and the rotation-to-translation conversion gear. Self-boosting electromechanical vehicle brakes have a self booster that converts a frictional force, exerted by the rotating brake body against the friction brake lining that is pressed for braking against the brake body, into a contact pressure, which presses the friction brake lining against the brake body in addition to a contact pressure that is exerted by the actuation device. Wedge, ramp, and lever mechanisms can be used for the self boosting.

There remains a desire to improve safety and efficiency of electric brake systems

### SUMMARY

Aspects of the present invention relate to an electric brake system. A brake mechanism is configured to apply braking to a wheel of a vehicle, or release braking of the wheel, depending on a mechanical state of the brake mechanism. An electric brake motor is configured to transduce electrical power into mechanical power. A brake transmission is configured to transmit the mechanical power from the electric brake motor to the brake mechanism. The brake transmission comprises a self-locking mechanism configured to maintain the mechanical state of the brake mechanism in absence of the electrical power to the electric brake motor. A primary gear is operationally connected to rotate with the brake transmission. While braking is applied to the wheel via the brake transmission the primary gear is rotated in a brake applying direction. While braking of the wheel is released, the primary gear is rotated in an opposite, brake releasing direction. A safety braking release unit is configured to operate in different states. In a (default) deactivated state the release unit does not operationally engage the primary gear. In an activated state the release unit is configured to operationally engage and rotate the primary gear in the brake releasing direction until a safe-state position is reached in which the braking is deactivated.

A self-locking mechanism can be understood as a mechanism configured to lock against release of the braking in absence of electrical power to the brake motor. For example, the brake mechanism is locked in position after applying torque in the brake releasing direction, and maintains the braking of the vehicle without requiring continued powering of the electric brake motor. Advantageously this may conserve energy in the electrical system. However, the inventors recognize that such self-locking mechanism can also be problematic, e.g. in case of failure in the brake motor or the control thereof. By providing a safety braking release unit that can operate independent of the brake motor and/or the (primary) brake controller, this secondary unit can restore a safe-state of the system, e.g. by forcibly releasing the braking of the wheel independent of the (primary) brake motor and/or its controller. Additionally, by having the release unit disengaged from the primary gear in its deactivated state, drag of the release unit on brake transmission can be alleviated. For example, an actuating member of the release unit is operable to actuate the primary gear when the release unit is in the activated state, whereas the actuating member is physically or mechanically disengaged from the primary gear when the release unit is in the deactivated state. In other words, the actuating member of the release unit can be selectively disconnected from the primary gear, so the actuating member is not affected by rotation of the primary gear in the deactivated state of the release unit. This may save further energy and prevent (mechanical) wear. For example, providing the release unit with a secondary gear that is only partially teethed, can provide a relatively simple and robust mechanism which can rotate the primary gear in case of emergency while otherwise staying disengaged.

### BRIEF DESCRIPTION OF DRAWINGS

These and other features, aspects, and advantages of the apparatus, systems and methods of the present invention will become better understood from the following description, appended claims, and accompanying drawing wherein:
FIG 1 illustrates an electric brake system;
FIGs 2A and 2B illustrate a set of gears involved in emergency brake release.

### DESCRIPTION OF EMBODIMENTS

Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise. Likewise it will be understood that when a connection between structures or components is described, this connection may be established directly or through intermediate structures or components unless specified otherwise.

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

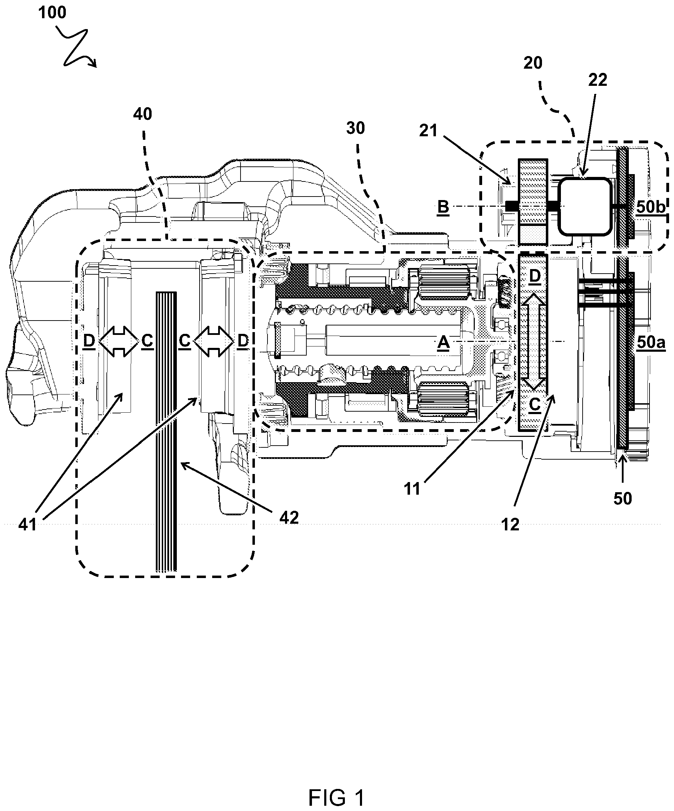

FIG 1 illustrates an electric brake system 100. As described herein, the brake system 100 comprises or couples to an electric brake motor 12 which transmits mechanical energy to a brake mechanism 40 via a brake transmission 30. Typically, the electric brake motor 12 is configured to transduce electrical power into mechanical power. An electric motor is understood as a machine that converts electrical energy into mechanical energy. For example, the electric motor operates through interaction between the motor's magnetic field and electric current in a wire winding to generate force in the form of rotation of an output shaft.

In some embodiments, the system comprises or couple to a brake mechanism 40 configured to apply braking to a wheel of a vehicle, or release braking of the wheel, depending on a mechanical state of the brake mechanism 40. For example, the mechanical state of the brake mechanism 40 may vary anywhere between a (maximum) braked state, and a (fully) released state in which no braking is applied, or intermediate states in which at least some braking is applied.

Typically, a brake transmission 30 is configured to transmit the mechanical power from the electric brake motor 12 to the brake mechanism 40. In a preferred embodiment, as described herein, the brake transmission 30 comprises a self-locking mechanism. For example, the locking mechanism is configured to maintain the mechanical state of the brake mechanism 40 in absence of the electrical power to the electric brake motor 12. In some embodiments, self-locking occurs when the brake transmission is in a static state - i.e. not moving. For example, , the brake transmission comprises a worm gear. Without being bound by theory, as long as a coefficient of friction between the gear and the worm is larger than the tangent of the worm's lead angle, the worm gear can be considered self-locking and will not back drive. Of course also other self-locking mechanisms can be used.

In one embodiment, the brake system comprises a piston-type mechanism, but also other mechanism may be used. Typically, the brake transmission comprises a set of gears which are operationally connected to an output axle of the brake motor 12. In some embodiments, gears in the brake transmission are configured to drive a spindle which is housed in a spindle nut to move a piston. In one embodiment, the piston in turn is guided, e.g. by guide pins to drive the opening and closing movements of a caliper 41 which can be considered part of the brake mechanism 40. For example, the caliper is fitted with two opposing brake pads. The mechanical energy which is transmitted via the brake transmission 30 to the brake mechanism 40 is thus ultimately used to drive the two braking pads closer to each other to perform or activate a braking operation, and apart from each other to release of deactivate a braking operation. In some embodiments, the caliper 41 is fixed to a bracket by which the caliper 41 is, e.g., suspended over a brake disc 42 of a wheel such that the brake disc is provided between the pads of the caliper. For example, the brake disc 42, is connected to at least one wheel of the vehicle, e.g. on a wheel axle directly connected to the wheel and brake disc.

In some embodiments, e.g. as shown, a primary gear 11 is operationally connected to rotate with the brake transmission 30. For example, while braking is applied to the wheel via the brake transmission the primary gear 11 is rotated in a brake applying direction "C". For example, while braking of the wheel is released, the primary gear 11 is rotated in an opposite, brake releasing direction "D". In a preferred embodiment, a safety braking release unit 20 is provided. Most preferably, the release unit is capable of operating (by default) in a deactivated state. In this state the release unit 20 does not operationally engage the primary gear 11. Additionally, or alternatively, the release unit can preferably be activated, e.g. in case of emergency. When activated the release unit 20 is preferably configured to operationally engage and rotate the primary gear 11 in the brake releasing direction "D". This rotation may e.g. continue until a safe-state position is reached in which the braking is deactivated.

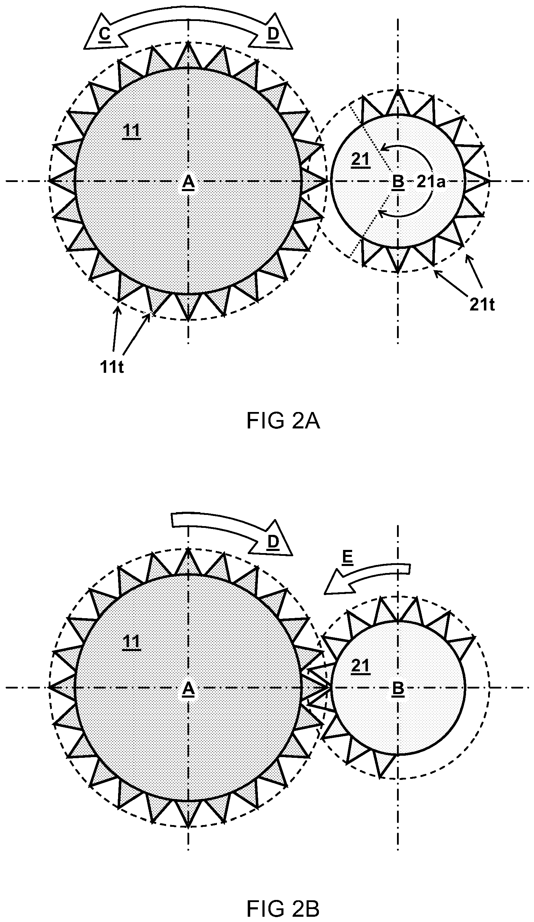

In some embodiments, the release unit 20 comprises a release motor 22 configured to actuate a secondary gear 21 to rotate. Preferably, the secondary gear 21 rotates around a second axis B, parallel and adjacent a first axis A around which the primary gear 11 rotates. For example, FIG 2A illustrates a secondary gear 21 of a release unit disengaged from a primary gear 11 operationally connected to a brake transmission of the brake system 100. For example, FIG 2B illustrates the gears engaging each other when the secondary gear 21 rotates to release a brake mechanism 40 of the brake system 100.

In a preferred embodiment, the primary gear 11 is fully teethed 11t around its whole circumference while the secondary gear 21 is partially teethed 21t around only a portion 21a of its circumference. In some embodiments, in the deactivated state, the secondary gear 21 and the primary gear 11 are disengaged. For example, this is effected by the release unit 20 keeping the secondary gear 21 at an angle at which a portion of the circumference of the secondary gear 21 without teeth faces the primary gear 11. In other or further embodiments, in the activated state, the release unit 20 is configured to rotate the secondary gear 21. This cause (periodical) engagement between the partially teethed portion of the secondary gear 21 with the fully teethed circumference of the primary gear 11. In this way the primary gear 11 can be rotated in the brake releasing direction "D", e.g. until the safe-state position is reached.

In some embodiments, the self-locking mechanism in the brake transmission 30, or elsewhere, may keep the brake mechanism 40 locked in a brake state absent energizing the electric brake motor 12 but release the locking when the release motor 22 is energized. As will be appreciated using a combination of fully and partially teethed gears can provide a simple mechanism which can be easily engaged or disengaged depending on an angle or rotation of the partially teethed gear. While this mechanism provides a most simple and elegant solution, also other mechanisms can be envisaged. For example, another possible mechanism (not shown) comprises a fully teethed secondary gear which is translated to engage or disengage the primary gear, e.g. by shifting a position of the secondary gear along its axis, or radially.

In some embodiments, the system comprises or is (electrically) connected a control system 50 which may affect an operational of the brake motor 12 and/or release motor 22. In one embodiment, a secondary controller 50b is configured to switch the release unit 20 from the deactivated state to the activated state upon receiving of a trigger. Typically, the secondary controller 50b is configured to be triggered in response to a failure in the brake system 100. For example, the trigger is responsive to a failure in a primary controller 50a controlling the electric brake motor 12, wherein the secondary controller 50b of the release unit is configured to operate independent of the primary controller 50a .

Preferably, the brake system 100 is controlled as a brake-by-wire system, e.g. without hydraulics. In one embodiment, the control system 50 is configured to monitor an electrical brake signal depending on the state of a brake pedal in the vehicle. For example, when a brake signal is received indicating that the brake pedal is pressed down, the brake motor 12 may rotate its output shaft in one direction (causing the primary gear 11 to be rotated in the brake applying direction "C"). For example, when a release signal is received indicating that the brake pedal is released, the brake motor 12 may rotate its output shaft in another direction (causing the primary gear 11 to be rotated in the brake releasing direction "D").

In some embodiments, the brake system includes a diagnostic unit configured to a detect failures in the brake system. The diagnostic unit can be considered as part of the control system 50, e.g. part of the secondary controller 50b, or separate. For example, in response to a detected failure, the diagnostic unit may send a trigger to activate the release unit 20. In one embodiment, detected failures may include one or more of a failure of the brake motor 12, failure in a primary controller 50a of the brake motor 12, a software failure, and/or an electrical connection failure. Of course also other types of failures can be envisaged. In one embodiment, when a release signal is received by the control system 50, and it is detected that the brake motor 12, for whatever reason does not cause the brake mechanism 40 to be released, a trigger is sent to the release unit 20 to rotate the release motor 22 in an emergency release direction until a safe-state is reached.

In a preferred embodiment, the release motor is also an electric motor. In some embodiments, the release motor 22 may have other, e.g. fewer, capabilities compared to the (primary) brake motor 12. In some embodiments, the release motor 22 is only configured to rotate in an emergency release direction "E" (e.g. shown in FIG 2B) causing the primary gear 11 to rotate in the brake releasing direction "D". For example, the release motor 22 can be a unidirectional motor that is used only in case of emergency for releasing the brake when the brake motor 12 should fail. In other or further embodiments, the release motor 22 is a less powerful motor. For example, an output shaft of the release motor 22 is capable of a first maximum torque, and an output shaft of the brake motor 12 is capable of a second maximum torque. In one embodiment, the first maximum torque is smaller than the second maximum torque. In some embodiments, the torque is increased in a transmission path between the release motor 22 and the brake transmission, e.g. primary gear 11. For example, the maximum torque of the release motor 22 is increased by the transmission between the secondary gear 21 to the primary gear 11, or in a transmission path before the secondary gear 21.

In one embodiment, the secondary gear 21 is directly attached to an output shaft of the release motor 22. Advantageously this may simplify construction and alleviate chance of mechanical failure. In another or further embodiment, the primary gear 11 has a larger outer diameter than the secondary gear 21, e.g. by at least a factor one-and-half, two, or more. The higher the ratio of diameters, the more the torque can be increased exerted by the secondary gear 21 on the primary gear 11 (and the brake transmission connected thereto).

Once the release unit 20 is activated, it can start rotating the secondary gear 21 in the emergency release direction "E" until it can go no further, e.g. when the brake mechanism 40 is fully released. However, the forcible stop may cause damage to the system. Accordingly, it is preferred that the release motor 22 is configured to switch back from the activated state to the deactivated state upon detection of a stop signal, e.g. detected by means the secondary controller 50b from the release motor 22. In one embodiment, the stop signal is provided when a full release of braking is detected based on a value indicative of an electrical current drawn by the release motor 22 in the activated state. This can provide a relatively simple detection mechanism. Of course also other or further ways can be envisaged to monitor the release of the brake mechanism, one or more dedicated sensors that detect the release.

In principle the primary gear 11 can be connected anywhere to the brake transmission, or even be formed by a transmission gear which is part of the brake transmission transmitting the mechanical power from the electric brake motor 12 to the brake mechanism 40. Preferably though, the primary gear 11 is directly connected to an output shaft of the electric brake motor 12. Advantageously, this can provide a simple construction with minimal adaptation in the rest of the system. Most preferably the primary gear 11 is arranged on an outer runner ring of the motor. This may leave the output shaft of the brake motor 12 free to directly engage one or more gears of the brake transmission.

The construction as described herein may allow an advantageous placement of the two motors. Preferably, the release motor 22 is arranged directly adjacent the electric brake motor 12. This can have various advantages, e.g. maintenance and/or electrical connections to the motors. In a preferred embodiment, the release motor 22 and the electric brake motor 12 are electrically connected to an adjacent (integrated) controller system 50 including a primary controller 50a for controlling the electric brake motor 12 and a secondary controller 50b for controlling the release motor 22. Preferably, the (independently operably) primary and secondary controllers are disposed on a common circuit board forming an integrated or separated control system 50 adjacent the two motors.

In some embodiments, the release motor 22 has a higher maximum revolutions per unit time than the brake motor 12. This can allow a relatively fast release of the braking in case of emergency, e.g. providing similar performance as the primary brake motor 12 despite the release motor 22 having lower torque. Additionally, or alternatively, it will be appreciated that a release time of the braking mechanism may depend on the number of teeth on the secondary gear 21, e.g. compared to the number of teeth on the primary gear 11. For example, having more teeth on the secondary gear 21 may provide more rotation of the primary gear 11 for each rotation of the secondary gear 21. Preferably, therefore, at least fifty percent of a circumference of the secondary gear 21 is teethed (e.g. over an arc length of one hundred and eighty degrees), preferably at least sixty percent, or even more than seventy or eighty percent. The higher the portion of the circumference provided with teeth 21t, the more effective each rotation of the secondary gear 21 may move the primary gear 11. On the other hand, there has to be a sufficient portion of the secondary gear circumference without teeth, e.g. to allow disengagement between the gears when the release unit 20 is not active. In some embodiments, thus less than ninety percent of the circumference on the secondary gear 21 is teethed, preferably less than eighty percent. The larger the portion without teeth, the easier it is to avoid inadvertent engagement between the gears when the release unit 20 is inactive.

Some aspects of the present invention can be embodied as a method of controlling a brake system, e.g. as described herein. Some embodiments comprise receiving a trigger indicating a failure in part of the brake system. Other or further embodiments comprise activating the release unit 20, e.g. responsive to the trigger. When activated, the release unit 20 may cause the primary gear 11 to be rotated in the brake releasing direction "D". Some aspects of the present disclosure can be embodied as control system 50, e.g. for the brake system as described herein. For example, the controller is configured to perform the methods described herein. Other or further aspects can be embodied as a (non-transitory) computer-readable medium storing instructions that, when executed by the controller, cause the brake system to perform operational acts as described herein.

Aspects of the invention can also be embodied as a vehicle with the brake system. Preferably, the vehicle includes at least two, preferably four, brake systems as described herein. Most preferably each system is configured to (independently) perform the method as described herein, including independent release of a respective brake mechanism in case of failure to that specific brake system. Accordingly, when the brake system of one wheel fails, this system can be released while the vehicle can still be braked using the brake system of the other wheel(s). As will be appreciated, vehicle with a single locked brake system on one wheel may be more hazardous than a single released brake system in the vehicle still having at least one other brake system available.

In interpreting the appended claims, it should be understood that the word "comprising" does not exclude the presence of other elements or acts than those listed in a given claim; the word "a" or "an" preceding an element does not exclude the presence of a plurality of such elements; any reference signs in the claims do not limit their scope; several "means" may be represented by the same or different item(s) or implemented structure or function.

Where one claim refers to another claim, this may indicate synergetic advantage achieved by the combination of their respective features. But the mere fact that certain measures are recited in mutually different claims does not indicate that a combination of these measures cannot also be used to advantage. The present embodiments may thus include all working combinations of the claims wherein each claim can in principle refer to any preceding claim unless clearly excluded by context.

## Claims

1. An electric brake system (100) comprising
a brake mechanism (40) configured to apply braking to a wheel of a vehicle, or release braking of the wheel, depending on a mechanical state of the brake mechanism (40);
an electric brake motor (12) configured to transduce electrical power into mechanical power;
a brake transmission (30) configured to transmit the mechanical power from the electric brake motor (12) to the brake mechanism (40), wherein the brake transmission (30) comprises a self-locking mechanism configured to maintain the mechanical state of the brake mechanism (40) in absence of the electrical power to the electric brake motor (12);
a primary gear (11) operationally connected to rotate with the brake transmission (30), wherein while braking is applied to the wheel via the brake transmission, the primary gear (11) is rotated in a brake applying direction (C), and while braking of the wheel is released, the primary gear (11) is rotated in an opposite, brake releasing direction (D); and
a safety braking release unit (20) configured to operate in different states including
a deactivated state, wherein the release unit (20) does not operationally engage the primary gear (11), and
an activated state, wherein the release unit (20) is configured to operationally engage and rotate the primary gear (11) in the brake releasing direction (D) until a safe-state position is reached in which the braking is deactivated.

2. The system according to the preceding claim, wherein the release unit (20) comprises
a release motor (22) configured to actuate a secondary gear (21) to rotate around a second axis (B), parallel and adjacent a first axis (A) around which the primary gear (11) rotates;
wherein the primary gear (11) is fully teethed (11t) around its whole circumference while the secondary gear (21) is partially teethed (21t) around only a portion (21a) of its circumference;
wherein in the deactivated state, the secondary gear (21) and the primary gear (11) are disengaged by the release unit (20) keeping the secondary gear (21) at an angle at which a portion of the circumference of the secondary gear (21) without teeth faces the primary gear (11), and
wherein in the activated state, the release unit (20) is configured to rotate the secondary gear (21) and periodically engage its partially teethed portion with the fully teethed circumference of the primary gear (11) for rotating the primary gear (11) in the brake releasing direction (D) until the safe-state position is reached.

3. The system according to the preceding claim, wherein between fifty and ninety percent of a circumference of the secondary gear (21) is teethed

4. The system according to any of the preceding claims, wherein the release unit (20) includes a control system (50)with a secondary controller (50b) configured to switch the release unit (20) from the deactivated state to the activated state upon receiving of a trigger, wherein the secondary controller (50b) is configured to be triggered in response to a failure in the brake system (100).

5. The system according to the preceding claim, wherein the trigger is responsive to a failure in a primary controller (50a) controlling the electric brake motor (12), wherein the secondary controller (50b) of the release unit is configured to operate independent of the primary controller (50a) .

6. The system according to any of the preceding claims, comprising a diagnostic unit configured to a detect failures in the brake system and, in response to a detected failure, send a trigger to activate the release unit (20), wherein detected failures include at least one of a failure of the brake motor (12), failure in a primary controller (50a) of the brake motor (12), a software failure, and/or an electrical connection failure.

7. The system according to any of the preceding claims, wherein the release motor (22) is configured to switch back from the activated state to the deactivated state upon detection of a stop signal, wherein a secondary controller (50b) is configured to provide the stop signal when a full release of braking is detected based on a value indicative of an electrical current drawn by the release motor (22) in the activated state.

8. The system according to any of the preceding claims, wherein an output shaft of the release motor (22) is capable of a first maximum torque, and an output shaft of the brake motor (12) is capable of a second maximum torque, wherein the first maximum torque is smaller than the second maximum torque.

9. The system according to the preceding claim, wherein the secondary gear (21) is directly attached to an output shaft of the release motor (22), wherein the primary gear (11) has a larger outer diameter than the secondary gear (21) by at least a factor one-and-half.

10. The system according to any of the preceding claims, wherein the primary gear (11) is directly connected to an output shaft of the electric brake motor (12), arranged on an outer runner ring of the motor.

11. The system according to any of the preceding claims, wherein the release motor (22) is arranged directly adjacent the electric brake motor (12), and wherein the release motor (22) and the electric brake motor (12) are electrically connected to an adjacent controller system (50) including a primary controller (50a) for controlling the electric brake motor (12) and a secondary controller (50b) for independently controlling the release motor (22).

12. The system according to any of the preceding claims, wherein the release motor (22) is capable of a higher number of revolutions per unit time than the brake motor (12).

13. A method of controlling the system according to any of the preceding claims, the method comprising, responsive to receiving a trigger indicating a failure in part of the brake system, activating the release unit (20) to rotate the primary gear (11) in the brake releasing direction (D) until a safe-state position of the self-locking mechanism (30) is reached in which braking is deactivated

14. A control system (50) for a brake system (100) according to any of claims 1-12 configured to perform the method according to claim 13; or a non-transitory computer-readable medium storing instructions that, when executed by the controller, cause the brake system to perform the method.

15. A vehicle including four brake systems according to any of claims 1-12, each brake system having a separate control system according to claim 14 configured to perform the method of claim 13 independent of the other brake systems.

## Patentansprüche

1. Elektrische Bremsanlage (100), umfassend
einen Bremsmechanismus (40), dazu konfiguriert, in Abhängigkeit von einem mechanischen Zustand des Bremsmechanismus (40) Bremsung auf ein Rad eines Fahrzeugs anzuwenden oder die Bremsung des Rades zu lösen;
einen elektrischen Bremsmotor (12), dazu konfiguriert, elektrische Leistung in mechanische Leistung umzuwandeln;
eine Bremsübertragung (30), dazu konfiguriert, die mechanische Leistung vom elektrischen Bremsmotor (12) auf den Bremsmechanismus (40) zu übertragen, wobei die Bremsübertragung (30) einen selbstsperrenden Mechanismus umfasst, dazu konfiguriert, den mechanischen Zustand des Bremsmechanismus (40) bei Nichtanliegen der elektrischen Leistung an dem elektrischen Bremsmotor (12) aufrechtzuerhalten;
ein Primärzahnrad (11), wirkverbunden mit der Bremsübertragung (30), um sich mit ihr zu drehen, wobei dann, während über die Bremsübertragung Bremsung auf das Rad angewendet wird, das Primärzahnrad (11) in eine Bremsanwendungsrichtung (C) gedreht wird, und während Bremsung des Rades gelöst wird, das Primärzahnrad (11) in eine entgegengesetzte, die Bremslöserichtung, (D) gedreht wird; und
eine Sicherheitsbremslöseeinheit (20), dazu konfiguriert, in verschiedenen Zuständen zu arbeiten, einschließlich
eines deaktivierten Zustands, wobei sich die Löseeinheit (20) nicht in einem Wirkeingriff mit dem Primärzahnrad (11) befindet, und
eines aktivierten Zustands, wobei die Löseeinheit (20) dazu konfiguriert ist, in einen Wirkeingriff mit dem Primärzahnrad (11) in der Bremslöserichtung (D) zu gelangen und es zu drehen, bis eine sichere Stellung erreicht ist, in der die Bremsung deaktiviert ist.

2. Anlage nach dem vorstehenden Anspruch, wobei die Löseeinheit (20) umfasst:
einen Lösemotor (22), dazu konfiguriert, ein Sekundärzahnrad (21) zu betätigen, damit dieses sich um eine zweite Achse (B) dreht, parallel und benachbart zu einer ersten Achse (A), um die sich das Primärzahnrad (11) dreht;
wobei das Primärzahnrad (11) um seinen gesamten Umfang vollständig verzahnt (11t) ist, während das Sekundärzahnrad (21) teilweise, nur um einen Teil (21a) seines Umfangs, verzahnt (21t) ist;
wobei das Sekundärzahnrad (21) und das Primärzahnrad (11) im deaktivierten Zustand durch die Löseeinheit (20), die das Sekundärzahnrad (21) in einem Winkel hält, in dem ein Teil des Umfangs des Sekundärzahnrads (21) ohne Zähne dem Primärzahnrad (11) zugewandt ist, ausgerückt sind, und
wobei die Löseeinheit (20) im aktivierten Zustand dazu konfiguriert ist, das Sekundärzahnrad (21) zu drehen und periodisch seinen teilweise verzahnten Teil mit dem vollständig verzahnten Umfang des Primärzahnrads (11) zum Drehen des Primärzahnrads (11) in der Bremslöserichtung (D) in Eingriff zu bringen, bis die sichere Stellung erreicht ist.

3. Anlage nach dem vorstehenden Anspruch, wobei zwischen fünfzig und neunzig Prozent eines Umfangs des Sekundärzahnrads (21) verzahnt sind.

4. Anlage nach einem der vorstehenden Ansprüche, wobei die Löseeinheit (20) ein Steuerungssystem (50) mit einer Sekundärsteuerung (50b) einschließt, dazu konfiguriert, die Löseeinheit (20) beim Empfang eines Auslösers vom deaktivierten Zustand in den aktivierten Zustand zu schalten, wobei die Sekundärsteuerung (50b) dazu konfiguriert ist, in Reaktion auf einen Ausfall in der Bremsanlage (100) ausgelöst zu werden.

5. Anlage nach dem vorstehenden Anspruch, wobei der Auslöser auf einen Ausfall einer Primärsteuerung (50a) reagiert, die den elektrischen Bremsmotor (12) steuert, wobei die Sekundärsteuerung (50b) der Löseeinheit dazu konfiguriert ist, unabhängig von der Primärsteuerung (50a) zu arbeiten.

6. Anlage nach einem der vorstehenden Ansprüche, umfassend eine Diagnoseeinheit, dazu konfiguriert, Ausfälle in der Bremsanlage zu erkennen und in Reaktion auf einen erkannten Ausfall einen Auslöser zu senden, um die Löseeinheit (20) zu aktivieren, wobei erkannte Ausfälle mindestens einen Ausfall des Bremsmotors (12), einen Ausfall einer Primärsteuerung (50a) des Bremsmotors (12), einen Softwarefehler und/oder einen Ausfall einer elektrischen Verbindung einschließen.

7. Anlage nach einem der vorstehenden Ansprüche, wobei der Lösemotor (22) dazu konfiguriert ist, bei Erkennung eines Stoppsignals vom aktivierten Zustand in den deaktivierten Zustand zurückzuwechseln, wobei eine sekundäre Steuerung (50b) dazu konfiguriert ist, das Stoppsignal bereitzustellen, wenn ein vollständiges Lösen der Bremse basierend auf einem Wert, der für einen vom Lösemotor (22) im aktivierten Zustand gezogenen elektrischen Strom bezeichnend ist, erkannt wird.

8. Anlage nach einem der vorstehenden Ansprüche, wobei eine Abtriebswelle des Lösemotors (22) ein erstes maximales Drehmoment aufweisen kann und eine Abtriebswelle des Bremsmotors (12) ein zweites maximales Drehmoment aufweisen kann, wobei das erste maximale Drehmoment kleiner als das zweite maximale Drehmoment ist.

9. Anlage nach dem vorstehenden Anspruch, wobei das Sekundärzahnrad (21) direkt an einer Abtriebswelle des Lösemotors (22) befestigt ist, wobei das Primärzahnrad (11) einen mindestens um einen Faktor eineinhalb größeren Außendurchmesser als das Sekundärzahnrad (21) aufweist.

10. Anlage nach einem der vorstehenden Ansprüche, wobei das Primärzahnrad (11) direkt mit einer Abtriebswelle des elektrischen Bremsmotors (12), angeordnet auf einem äußeren Laufring des Motors, verbunden ist.

11. Anlage nach einem der vorstehenden Ansprüche, wobei der Lösemotor (22) dem elektrischen Bremsmotor (12) unmittelbar benachbart angeordnet ist, und wobei der Lösemotor (22) und der elektrische Bremsmotor (12) elektrisch mit einem benachbarten Steuerungssystem (50) verbunden sind, einschließend einer Primärsteuerung (50a) zur Steuerung des elektrischen Bremsmotors (12) und einer Sekundärsteuerung (50b) zur unabhängigen Steuerung des Lösemotors (22).

12. Anlage nach einem der vorstehenden Ansprüche, wobei der Lösemotor (22) in der Lage ist, eine höhere Anzahl von Umdrehungen pro Zeiteinheit als der Bremsmotor (12) zu erreichen.

13. Verfahren zur Steuerung der Anlage nach einem der vorstehenden Ansprüche, das Verfahren umfassend in Reaktion auf das Empfangen eines Auslösers, der einen Ausfall eines Teils der Bremsanlage angibt, das Aktivieren der Löseeinheit (20), um das Primärzahnrad (11) in der Bremslöserichtung (D) zu drehen, bis eine sichere Stellung des selbstsperrenden Mechanismus (30) erreicht ist, in der die Bremsung deaktiviert wird.

14. Steuerungssystem (50) für eine Bremsanlage (100) nach einem der Ansprüche 1-12, dazu konfiguriert, das Verfahren nach Anspruch 13 auszuführen; oder ein nicht flüchtiges computerlesbares Medium, das Anweisungen speichert, die, wenn sie durch die Steuerung ausgeführt werden, die Bremsanlage dazu veranlassen, das Verfahren auszuführen.

15. Fahrzeug, einschließend vier Bremsanlagen nach einem der Ansprüche 1-12, wobei jede Bremsanlage ein separates Steuerungssystem nach Anspruch 14 aufweist, das dazu konfiguriert ist, das Verfahren nach Anspruch 13 unabhängig von den anderen Bremsanlagen durchzuführen.

## Revendications

1. Système de frein électrique (100) comprenant
un mécanisme de frein (40) configuré pour appliquer un freinage à une roue d'un véhicule, ou relâcher le freinage de la roue, en fonction d'un état mécanique du mécanisme de frein (40);
un moteur de frein électrique (12) configuré pour convertir l'énergie électrique en énergie mécanique;
une transmission de frein (30) configurée pour transmettre l'énergie mécanique du moteur de frein électrique (12) au mécanisme de frein (40), dans lequel la transmission de frein (30) comprend un mécanisme autobloquant configuré pour maintenir l'état mécanique du mécanisme de frein (40) en l'absence d'énergie électrique pour le moteur de frein électrique (12);
un engrenage primaire (11) relié de manière fonctionnelle pour tourner avec la transmission de frein (30), dans lequel, tandis qu'un freinage est appliqué à la roue par l'intermédiaire de la transmission de frein, l'engrenage primaire (11) est amené à tourner dans un sens d'application de frein (C), et tandis que le freinage de la roue est relâché, l'engrenage primaire (11) est amené à tourner dans un sens de relâchement de frein opposé (D); et
une unité de relâchement de freinage de sécurité (20) configurée pour fonctionner dans différents états incluant
un état désactivé, dans lequel l'unité de relâchement (20) n'enclenche pas de manière fonctionnelle l'engrenage primaire (11), et
un état activé, dans lequel l'unité de relâchement (20) est configurée pour enclencher de manière fonctionnelle et faire tourner l'engrenage primaire (11) dans le sens de relâchement de frein (D) jusqu'à ce qu'une position d'état de sécurité soit atteinte dans laquelle le freinage est désactivé.

2. Système selon la revendication précédente, dans lequel l'unité de relâchement (20) comprend
un moteur de relâchement (22) configuré pour actionner un engrenage secondaire (21) pour tourner autour d'un deuxième axe (B), parallèle et adjacent à un premier axe (A) autour duquel l'engrenage primaire (11) tourne;
dans lequel l'engrenage primaire (11) est entièrement denté (11t) autour de toute sa circonférence tandis que l'engrenage secondaire (21) est partiellement denté (21t) autour seulement d'une partie (21a) de sa circonférence;
dans lequel, dans l'état désactivé, l'engrenage secondaire (21) et l'engrenage primaire (11) sont désenclenchés par l'unité de relâchement (20) maintenant l'engrenage secondaire (21) à un angle auquel une partie de la circonférence de l'engrenage secondaire (21) sans dents fait face à l'engrenage primaire (11), et
dans lequel, dans l'état activé, l'unité de relâchement (20) est configurée pour faire tourner l'engrenage secondaire (21) et enclencher périodiquement sa partie partiellement dentée avec la circonférence entièrement dentée de l'engrenage primaire (11) pour faire tourner l'engrenage primaire (11) dans le sens de relâchement de frein (D) jusqu'à ce que la position d'état de sécurité soit atteinte.

3. Système selon la revendication précédente, dans lequel entre cinquante et quatre-vingt-dix pour cent d'une circonférence de l'engrenage secondaire (21) est denté.

4. Système selon l'une quelconque des revendications précédentes, dans lequel l'unité de relâchement (20) inclut un système de commande (50) avec un organe de commande secondaire (50b) configuré pour faire passer l'unité de relâchement (20) de l'état désactivé à l'état activé lors de la réception d'un déclencheur, dans lequel l'organe de commande secondaire (50b) est configuré pour être déclenché en réponse à une défaillance dans le système de frein (100).

5. Système selon la revendication précédente, dans lequel le déclencheur est sensible à une défaillance dans un organe de commande primaire (50a) commandant le moteur de frein électrique (12), dans lequel l'organe de commande secondaire (50b) de l'unité de relâchement est configuré pour fonctionner indépendamment de l'organe de commande primaire (50a).

6. Système selon l'une quelconque des revendications précédentes, comprenant une unité de diagnostic configurée pour détecter des défaillances dans le système de frein et, en réponse à une défaillance détectée, envoyer un déclencheur pour activer l'unité de relâchement (20), dans lequel les défaillances détectées incluent au moins l'une d'une défaillance du moteur de frein (12), d'une défaillance dans un organe de commande primaire (50a) du moteur de frein (12), d'une défaillance de logiciel et/ou d'une défaillance de connexion électrique.

7. Système selon l'une quelconque des revendications précédentes, dans lequel le moteur de relâchement (22) est configuré pour repasser de l'état activé à l'état désactivé lors de la détection d'un signal d'arrêt, dans lequel un organe de commande secondaire (50b) est configuré pour fournir le signal d'arrêt lorsqu'un relâchement complet du freinage est détecté sur la base d'une valeur indicative d'un courant électrique consommé par le moteur de relâchement (22) dans l'état activé.

8. Système selon l'une quelconque des revendications précédentes, dans lequel un arbre de sortie du moteur de relâchement (22) est capable d'un premier couple maximum, et un arbre de sortie du moteur de frein (12) est capable d'un deuxième couple maximum, dans lequel le premier couple maximum est inférieur au deuxième couple maximum.

9. Système selon la revendication précédente, dans lequel l'engrenage secondaire (21) est fixé directement à un arbre de sortie du moteur de relâchement (22), dans lequel l'engrenage primaire (11) a un diamètre extérieur plus grand que l'engrenage secondaire (21) d'au moins un facteur un et demi.

10. Système selon l'une quelconque des revendications précédentes, dans lequel l'engrenage primaire (11) est relié directement à un arbre de sortie du moteur de frein électrique (12), disposé sur un anneau mobile extérieur du moteur.

11. Système selon l'une quelconque des revendications précédentes, dans lequel le moteur de relâchement (22) est disposé de manière directement adjacente au moteur de frein électrique (12), et dans lequel le moteur de relâchement (22) et le moteur de frein électrique (12) sont connectés électriquement à un système d'organes de commande (50) adjacent incluant un organe de commande primaire (50a) pour commander le moteur de frein électrique (12) et un organe de commande secondaire (50b) pour commander indépendamment le moteur de relâchement (22).

12. Système selon l'une quelconque des revendications précédentes, dans lequel le moteur de relâchement (22) est capable d'un nombre de tours par unité de temps plus élevé que le moteur de frein (12).

13. Procédé de commande du système selon l'une quelconque des revendications précédentes, le procédé comprenant, en réponse à la réception d'un déclencheur indiquant une défaillance dans une partie du système de frein, l'activation de l'unité de relâchement (20) pour faire tourner l'engrenage primaire (11) dans le sens de relâchement de frein (D) jusqu'à ce qu'une position d'état de sécurité du mécanisme autobloquant (30) soit atteinte dans laquelle le freinage est désactivé.

14. Système de commande (50) pour un système de frein (100) selon l'une quelconque des revendications 1 à 12, configuré pour mettre en oeuvre le procédé selon la revendication 13; ou support lisible par ordinateur non transitoire stockant des instructions qui, lorsqu'elles sont exécutées par l'organe de commande, amènent le système de frein à mettre en oeuvre le procédé.

15. Véhicule incluant quatre systèmes de frein selon l'une quelconque des revendications 1 à 12, chaque système de frein ayant un système de commande séparé selon la revendication 14 configuré pour mettre en oeuvre le procédé de la revendication 13 indépendamment des autres systèmes de frein.
